# EUROPEAN PATENT APPLICATION

(11) **EP 1 427 263 A1**
(43) Date of publication of application: **09.06.2004**
(21) Application number: 03425612.3
(22) Date of filing: 19.09.2003
(51) Int. Cl.: H05B 41/288, H05B 41/295, H05B 41/04, H05B 41/292

(54) **Electronic ballast for discharge lamps**

(30) Priority: 04.12.2002 IT RM20020609
(71) Applicant: Mazo, Alessandro, 37135 Verona (IT)
(72) Inventor: Mazo, Alessandro, 37135 Verona (IT)
(74) Representative: Leone, Mario

(57) **Abstract**

An electronic ballst for discharge lamps is composed of a supply stage (SA) based on a half bridge oscillating circuitry; a driving circuit (12); a signals generation unit (microprocessor) (I3) with two outputs (1, 2), which generate two signals (S1, S2) to drive the unit (12); this two signals (S1, S2) are designed to reproduce 2 high frequency square waves 180° out of phase and frequency modulated.

## Description

The present invention is related to an high frequency electronic ballast for discharge lamps.

Discharge lamps, to be used, need, in comparison with halogen or fluorescent lamps, some special electrical devices.

Such devices are substantially an igniter providing the striking electric discharge into the lamp and a ballast to control the current flowing in the striking discharge.

The ballast can be substantially one of two types.

The simplest is an electromagnetic ballast, similar to those used for supplying fluorescent lamps.

Nevertheless, such solution has some limit. In fact, corresponding devices normally are heavy and bulky.

Furthermore, their operation is so that the lighting emission strongly depends on supply voltage variations. Therefore a lamp, supplied by means of a traditional sinusoidal alternate 50 Hz power supply, is subjected to present a flickering effect, really negative, especially in some circumstance (photography, cinema/televion shootings).

A second type of ballast, so called electronic ballast, consists of an electronic supplier designed to supply the discharge lamp with a square wave current.

This second type of ballast reduces the flickering effect, by means of full bridge technology, increasing the stability of the lighting emission. These electronic ballasts supply the discharge lamps with a low frequency current (max. 200 Hz). This technology presents low reliability and ignition difficulty.

Scope of the present invention is to solve the above mentioned problems, providing an electronic ballast for a discharge lamp comprising a lamp supply stage based on a high frequency half bridge oscillating circuit, characterised in that it comprises:
- a driving circuit of such supply stage;
- a signals generation unit having at least one output, apt to generate one or more supply signals for supplying said driving circuit,
said signals being therebetween related by a predetermined phase relationship and respectively frequency modulated.

Advantages, way of use and characteristics of the present invention will be apparent in the following detailed description of its preferred embodiments, given by way of example and without limitative purposes, making reference to the figures of the annexed drawings, wherein:
figure 1 is an electrical scheme related to a first embodiment of a ballast according to the present invention;
figure 2 is an electrical scheme related to a second embodiment of a ballast according to the present invention; and
figures 3A and 3B are graphs representing the frequency modulation law, used in a ballast according to the present invention.

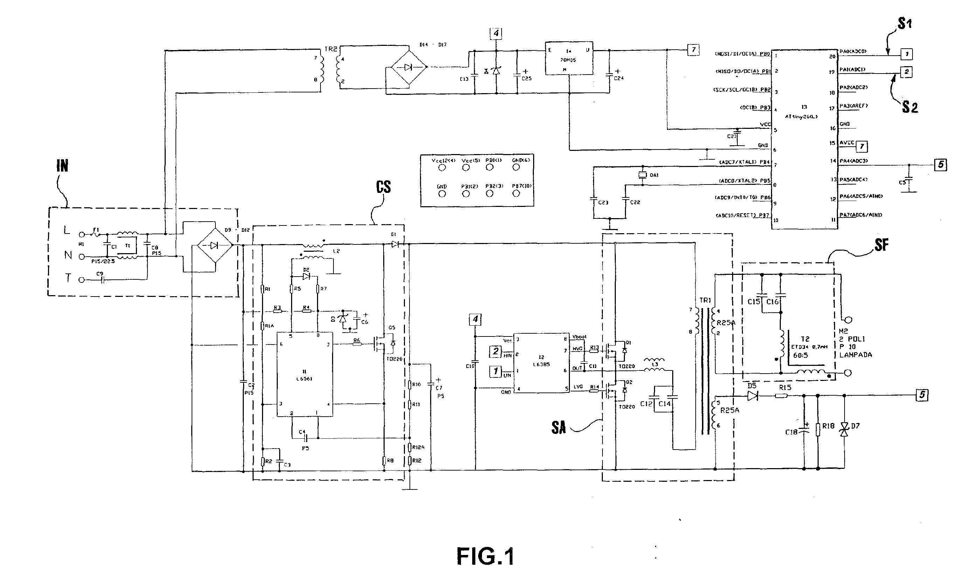

With reference to the figures, figure 1 is an electrical scheme of a first embodiment of an electronic ballast for discharge lamps according to the present invention.

On going through the description the term "discharge lamp" will intend all those lamp functioning according to the same principles (HID LAMPS).

Examples of these lamps are the metal halide lamps and the sodium lamps (high or low pressure lamps).

The ballast of figure 1 includes some functional blocks easily identified in the electrical scheme.

In particular, an input stage IN is provided, where the supply voltage is applied, said input stage including a filtering section EMC, preferably LC and a rectifying bridge, preferably a diode bridge type.

The output of the filtering section supplies the power factor (cos Φ) correction section CS.

Such section CS comprises a chip I1, a mosfet Q5 and a coil L2 with naturally other biasing and controlling circuitry.

The cos Φ correction section CS is well known on the market and a more detailed description is not necessary.

The electronic ballast, according to the present invention, comprises a signals generation unit I3 (microprocessor type).

The unit I3 is supplied by means of the rectified voltage, controlled through the chip I4.

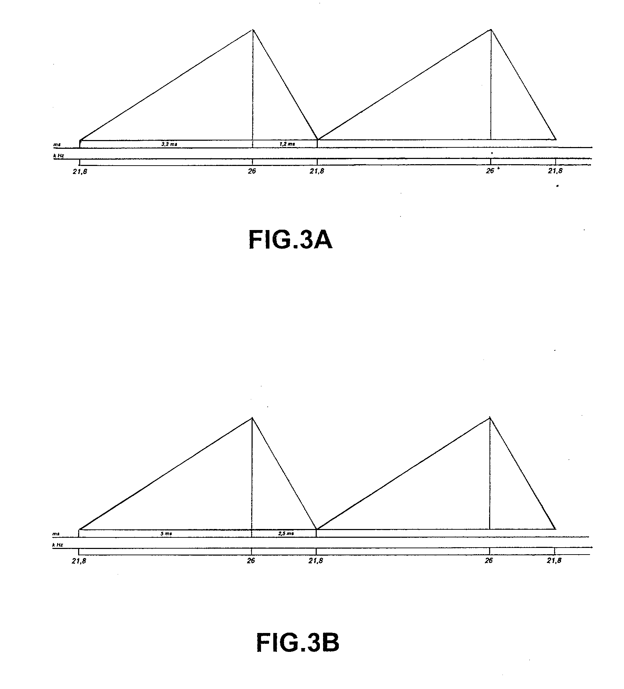

The microprocessor unit I3, of a programmable type, is programmed to generate, on its two outputs identified by the numerals 1 and 2, two respective square wave signals S1 and S2, 180° out of phase and frequency modulated according to a function having a periodic shape as displayed in the figures 3A and 3B.

The figures 3A and 3B are two different examples of frequency modulation realized with different frequencies (227 Hz and 133 Hz).

Each of the signals S1, S2 is frequency modulated so that the respective switching frequency has, in a first time interval Tup, a variation from a minimum value FMin preferably equal to 21.8 KHz, to a maximum value FMax preferably equal to 26 KHz, and an opposite variation in a second time interval Tdn, where the modulation frequency is equal 1/(Tup+Tdn).

In the case of 227 Hz frequency modulation (figure 3A), the half bridge oscillation frequency changes from 21.8 KHz and 26 KHz, with steps of 75 Hz in a period Tup equal to 3.2 ms.

When the maximum frequency of 26 KHZ is reached, the oscillation frequency decreases with steps of 150 Hz, till 21.8 KHZ in a period Tdn equal to 1.2 ms.

In the case of 133 Hz frequency modulation, the half bridge oscillation frequency changes from 21.8 KHz and 26 KHz in a period Tup equal to 5 ms and, by reaching the maximum frequency of 26 KHZ, the switching frequency goes to the minimum of 21.8 KHZ in a period Tdn equal to 2.5 ms.

It has been observed that all the values included between 133 and 227 Hz allow a good stabilisation of the lighting emission and eliminate the mechanical resonances (flickering effect).

We do not exclude that other values out of this range could be used with the same good results.

At the same time also, the frequency change interval (FMin, FMax) could be reduced, keeping the same modulation frequency, obtaining anyway the desired result, that is the complete elimination of the flickering and of the acoustic resonances, by way of example the range can be reduced to 22.2 KHz to 26 KHz.

It has been observed that, for a 70W metal halide lamp, a frequency range extending from 22,2 kHz to 25,2 is particularly adapt, while for a 35W metal halide lamp, is needed a range from 23,8 kHz to 25,5 kHz.

The signals S1, S2, so modulated, are utilized to supply an integrated circuit 12 that is the driver circuit for the next lamp supply stage SA.

The supply stage SA is realized by means of an LC resonating half bridge circuit, with introduction of a transformer TR1.

Due to the specific supply, the half bridge oscillates at a frequency that changes from 21.8 KHz e 26 KHz according to the modulation function given in figures 3A and 3B.

The microprocessor unit I3, in addiction to the signals S1, S2 generation and to perform their frequency modulation, is also advantageously programmed to protect the ballast in case of non-wanted events as: old lamp, absence of lamp, wrong lamp or short-circuit. This protection automatically intervene stopping the ballast after a predetermined number of failed attempts to restart, i.e. 40 attempts.

The ballast, according to the present invention, further comprises a final stage SF to strike the lamp. The stage SF comprises an auto-transformer T2 with a proper turns ratio that increases the voltage according to its turns ratio.

It has been observed that operating on such element (augmenting the primary/secondary turns ratio), is also possible to make the "hot restrike" of the lamp.

For completeness of the description, in the following are reported some tables containing the components list used for the scheme of figure 1.

**Table 1**

| (Resistors) | | |
|---|---|---|
| **cod** | **value (ohm)** | **size (W)** |
| R1 | 1M (1%) | 1206 |
| R1A | 560k (1%) | 1206 |
| R2 | 10k (1%) | 1206 |
| R3 | 100k | 1206 |
| R4 | 100k | 1206 |
| R5 | 68k | 1206 |
| R6 | 47 | 1206 |
| R7 | 0 | 1206 |
| R8 | 0,56 | 1 |
| R9 | | |
| R10 | 1M (1%) | 1206 |
| R11 | 820k (1%) | 1206 |
| R12 | 10k (1%) | 1206 |
| R12A | 2k2 (1%) | 1206 |
| R13 | 100 | 1206 |
| R14 | 100 | 1206 |
| R15 | 120k | 1206 |
| R16 | | |
| R17 | | |
| R18 | 100k | 1206 |
| R19 | | |
| R20 | | |

**Table 2**

| (Capacitors) | | |
|---|---|---|
| **cod** | **value (MF)** | **voltage (V)** |
| C1 | 0,33 P.15 | 400 |
| C2 | 0,22 P.15 | 400 |
| C3 | 10nF | 1206 |
| C4 | 0,68 | 1206 |
| C5 | 10nF | 1206 |
| C6 | 47 eletr. | 25 |
| C7 | 33 eletr.rad. | 450 |
| C8 | 0,22 P.15 | 400 |
| C9 | 1nF p.5 | Y2 |
| C10 | 100nF | 1206 |
| C11 | 0,22 | 1206 |
| C12 | 0,1 P.15/22,5 | 630 |
| C13 | 0,1 | 1206 |
| C14 | 0,1 P.15/22,5 | 630 |
| C15 | 10n P.15 | 1600 |
| C16 | 10n P.15 | 1600 |
| C17 | | |
| C18 | 10 | 1206 |
| C19 | | |
| C20 | | |
| C21 | 0,1 | 1206 |
| C22 | 12pF | 805 |
| C23 | 12pF | 805 |
| C24 | 100 eletr. | 25 |
| C25 | 220 eletr. | 25 |

**Table 3**

| (Diodes) | |
|---|---|
| **cod** | **type** |
| D1 | MURS160 (SMB) |
| D2 | MURS 160 (SMB) |
| D3 | Zener 15V (melf) |
| D4 | Zener 15V (melf) |
| D5 | MURS 160 (SMB) |
| D6 | |
| D7 | BZW5V8(SMB) |
| D8 | |
| D9 | 1N4007 (melf) |
| D10 | 1N4007 (melf) |
| D11 | 1N4007 (melf) |
| D12 | 1N4007 (melf) |
| D13 | |
| D14 | LL4148 (minimelf) |
| D15 | LL4148 (minimelf) |
| D16 | LL4148 (minimelf) |
| D17 | LL4148 (minimelf) |

**Table 4**

| (Transistors and chips) | |
|---|---|
| **cod** | **type** |
| Q1 | P9NB50 |
| Q2 | P9NB50 |
| QA1 | quarzo 16 MHz RALTRON HC-49/S |
| Q5 | P9NB50 |
| I1 | L6561 (so8) |
| I2 | L6385 (so8) |
| I3 | ATMEL tiny26L(smd) |
| I4 | 78M05 |

**Table 5**

| (Varistors) | |
|---|---|
| **cod** | **type** |
| F1 | 0,15/0,22 ohm 1/4W |

**Table 6**

| (Transformers) | |
|---|---|
| **cod** | **spec.** |
| L2 | FERRIT: E25 in B1 1,0-1,05 mH PRIM: WIRE 4x022 cod. EF2502M4-E536 |
| L3 | FERRIT: E28 in B1 1,0-1,05 mH PRIM: wire 4x022 cod. ER28P9C7-E536 |
| TR1 | R25/15/15 INSULATED A9 PRIM: 90 TURNS 0,45SS SEC: 50 TURNS 0,4SS AUX: 2 insulated turns Insulation: CASE ELK 60W |
| TR2 | 230/12V - 0,35VA |
| T1 | 2x27 mH - 2x4 mH |
| T2 | FERRIT: ETD 34 in B1 0,7mH 5/60 TURNS telephone wire ss0,38 |
| | **MASTER** CEM 1 1mm |

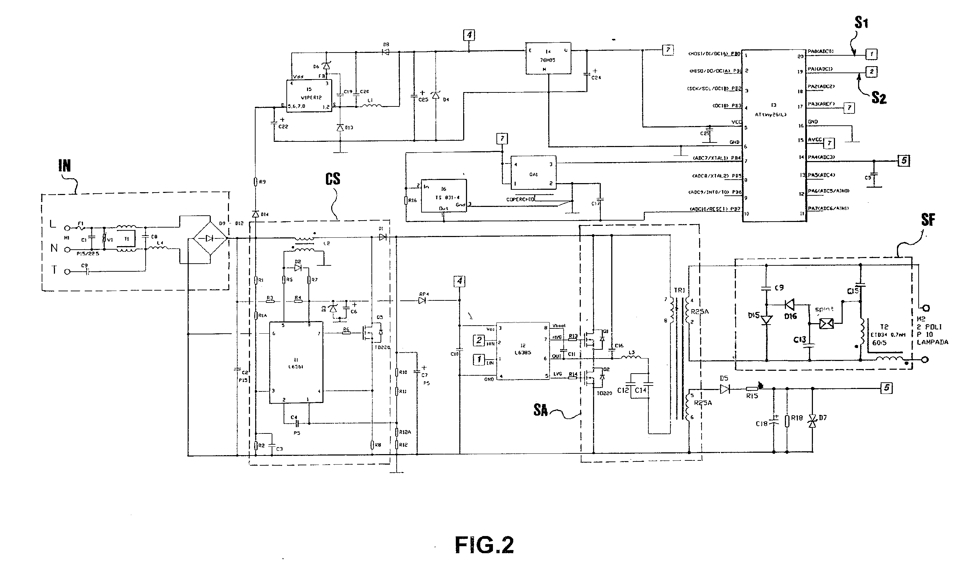

Figure 2 is an electric scheme of a second embodiment of an electronic ballast for discharge lamps according to the present invention.

The ballast according such embodiment, is based on a scheme substantially similar to the one in figure 1, so it is not necessary to give a new detailed description of the scheme. Same parts will be identified with same numerals and/or codes. Nevertheless, the scheme of figure 2 has some differences with respect to the scheme of figure 1 with regard to the value of some components. Furthermore, the final striking stage SF comprises a circuit including new components C9, D 15, D16, C 13, SPINT for making the "hot restrike" of the lamp.

In the following are reported some tables with the components list used for the scheme of figure 2.

**Table 7**

| (Resistors) | | |
|---|---|---|
| **cod** | **value (ohm)** | **size (W)** |
| R1 | 1M (1%) | 1206 |
| R1A | 560k (1%) | 1206 |
| R2 | 10k (1%) | 1206 |
| R3 | 100k | 1206 |
| R4 | 100k | 1206 |
| R5 | 68k | 1206 |
| R6 | 47 | 1206 |
| R7 | 0 | 1206 |
| R8 | 0,56 | 1 |
| R9 | 100 | 1 (mignon) |
| R10 | 1M (1%) | 1206 |
| R11 | 820k (1%) | 1206 |
| R12 | 10k (1%) | 1206 |
| R12A | 2k2 (1%) | 1206 |
| R13 | 100 | 1206 |
| R14 | 100 | 1206 |
| R15 | 150k | 805 |
| R16 | 4k7 | 1206 |
| R17 | | |
| R18 | 100k | 1206 |
| R19 | | |
| R20 | | |
| RP1 | 0 | 1206 |
| RP2 | 0 | 1206 |
| RP3 | 0 | 1206 |
| RP4 | 1N4007 | |
| RP5 | isolated bridge | |
| RP6 | bridge | |
| RP7 | bridge | |

**Table 8**

| (Capacitors) | | |
|---|---|---|
| **cod** | **value (MF)** | **voltage (V)** |
| C1 | 0,33 P.15 | 400 |
| C2 | 0,22 P.15 | 400 |
| C3 | 10nF | 1206 |
| C4 | 0,68 | 1206 |
| C5 | 10nF | 1206 |
| C6 | 47 eletr. | 25 |
| C7 | 33 eletr.rad. | 450 |
| C8 | 0,15 P 15 | 400 |
| C9 | 15n P.15 | 1600 |
| C10 | 100nF | 1206 |
| C11 | 0,22 | 1206 |
| C12 | 0,1 P.15/22,5 | 630 |
| C13 | 15n P.15 | 1600 |
| C14 | 0,1 P.15/22,5 | 630 |
| C15 | 15n P.15 | 1600 |
| C16 | 1nF | Y1 |
| C17 | 10 | 1206 |
| C18 | 10 | 1206 |
| C19 | 22nF | 1206 |
| C20 | 4,7 el. Rad. | 25 |
| C21 | 0,1 | 1206 |
| C22 | 1 el. | 450 |
| C23 | | |
| C24 | 10 | 1206 |
| C25 | 4,7 eletr. | 25 |

**Table 9**

| (Diodes) | |
|---|---|
| **cod** | **type** |
| D1 | MURS 160 (SMB) |
| D2 | MURS 160 (SMB) |
| D3 | Zener 15V (melf) |
| D4 | |
| D5 | LS4148 minimelf |
| D6 | Zener 13V (melf) |
| D7 | SM6T6V8(SMB) |
| D8 | MURS 160 (SMB) |
| D9 | 1N4007 (melf) |
| D10 | 1N4007 (melf) |
| D11 | 1N4007 (melf) |
| D12 | 1N4007 (melf) |
| D13 | MURS160 (SMB) |
| D14 | MURS160 (SMB) |
| D15 | BYX107G |
| D16 | BYX107G |

**Table 10**

| (Transistors and chips) | |
|---|---|
| **cod** | **type** |
| Q1 | STP11NM60 |
| Q2 | STP11NM60 |
| QA1 | oscil. C-MAC CFPS-721 |
| Q5 | STP11NM60 |
| I1 | L6561 (so8) |
| I2 | L6385 (so8) |
| I3 | ATMEL tiny26L(smd) |
| I4 | 78M05 (D-pack) |
| I5 | VIPER 22 (SO8) |
| I6 | TS 831-4 |

**Table 11**

| (Varistors) | |
|---|---|
| **cod** | **type** |
| F1 | 0,22 ohm 1/4W |
| V1 | 275V p. 5.5 |
| th1 | bridge |
| SPINT | Epcos 1600 |

**Table 12**

| (Transformers) | |
|---|---|
| **cod** | **spec.** |
| L1 | BOBBIN: 6,8 mH |
| L2 | FERRIT: E25 in B1 1,0-1,05 mH PRIM: wire 4x022 cod. EF2502M4-E536 |
| L3 | FERRIT: E28 in B1 1,0-1,05 mH PRIM: wire 4x022 cod. ER28P9C7-E536 |
| L4 | 1,8 mH su SP13 |
| J1 | in circuit program connector |
| TR1 | R25/15/15 insulated A9 PRIM: 90 turns 0,45SS SEC: 50 turns 0,4SS AUX: 2 insulated turns Insulation: CASE ELK 60W |
| M1 | 2P P.5 |
| M2 | 5/2P |
| T1 | 2x27 mH - 2x4 mH |
| T2 | FERRIT: ETD 34 in B1 0,7mH 5/60 turns telephone wire ss0,38 ETD34PA86-E536 |
| | **MASTER** CEM 1 1mm |

The present invention has hereto been described according to preferred embodiments thereof, given by way of example and without limitative purposes.

It is understood that other embodiments may exist, all to be construed as falling within the protective scope of the same invention, as defined by the annexed claims.

## Claims

1. Electronic ballast for a discharge lamp comprising a lamp supply stage (SA) based on a high frequency half bridge oscillating circuit, **characterised in that** it comprises:
- a driving circuit (I2) of such supply stage (SA);
- a signals generation unit (I3) having at least one output (1, 2), apt to generate one or more supply signals (S1, S2) for supplying said driving circuit (I2),
said signals (S1, S2) being therebetween related by a predetermined phase relationship and respectively frequency modulated.

2. Electronic ballast according to claim 1, wherein said signals (S1, S2) are two square waves signals.

3. Electronic ballast according to claim 1 or 2, wherein said signals (S1, S2) are 180° out of phase.

4. Electronic ballast according to any of the preceding claims, wherein echa signal of said signals (S1, S2) is frequency modulated so that the respective frequency changes from a minimum value (FMin) to a maximum value (FMax) in a first time interval (Tup), and from said maximum value (FMax) to said minimum value (FMin) in a second time interval (Tdn).

5. Electronic ballast according to claim 4, wherein said frequency variation in said first time interval (Tup) is linear with the time.

6. Electronic ballast according to claim 4 or 5, wherein said frequency variation in said second time interval (Tdn) is linear with the time.

7. Electronic ballast according to any of the claims 4 to 6, wherein said minimum frequency value (FMin) is about equal to 21.8 KHz.

8. Electronic ballast according to any of the claims 4 to 7, wherein said maximum frequency value (FMax) is about equal to 26kHz.

9. Electronic ballast according to any of the preceding claims, wherein said signal generation unit (I3) is a microprocessor unit.

10. Electronic ballast according to claim 9, wherein said microprocessor unit (I3) is of a programmable type.

11. Electronic ballast according to any of the preceding claims, wherein said supply stage (SA) comprises an LC resonating half bridge circuit, oscillating at variable frequency.

12. Electronic ballast according to claim 11, wherein said half bridge circuit oscillates between a minimum frequency value (FMin) to a maximum frequency value (FMax).

13. Electronic ballast according to claim 12, wherein said minimum frequency value (FMin) is about equal to 21.8 KHz.

14. Electronic ballast according to claim 12 or 13, wherein said maximum frequency value (FMax) is about equal to 26 KHz.

15. Electronic ballast according to claim 12, wherein said minimum frequency value (FMin) is about equal to 22.2 KHz.

16. Electronic ballast according to claim 15, wherein said maximum frequency value (FMax) is about equal to 25.2 KHz.

17. Electronic ballast according to claim 12, wherein said minimum frequency value (FMin) is about equal to 23.8 KHz.

18. Electronic ballast according to claim 17, wherein said maximum frequency value (FMax) is about equal to 25.5 KHz.

19. Electronic ballast according to any of the preceding claims, further comprising a final stage (SF) for striking the lamp, that includes an auto-transformer (T2) with a predetermined turns ratio, apt to increase on the secondary the supply voltage applied to the primary according to said turns ratio.

20. Electronic ballast according to any of the claims 1 to 18, further comprising a final stage (SF) for striking the lamp, that includes a circuit (C9, D15, D16, C13, SPINT) apt to make an "hot restrike" of said lamp.
